# FASCICULE DE BREVET EUROPEEN

(11) **EP 2 695 912 B1**
(45) Date de publication et mention de la délivrance du brevet: **02.12.2015**
(21) Numéro de dépôt: 13179354.9
(22) Date de dépôt: 06.08.2013
(51) Int. Cl.: C08L 51/06, C08F 255/02, H01B 3/44, C08K 3/00, C08K 3/22

(54) **Procédé de preparation d'une composition polymère chargée destinée a être reticulée**
Herstellungsverfahren einer beladenen Polymerzusammensetzung, die dazu bestimmt ist, gehärtet zu werden
Method for preparing a filled polymer composition intended for being cross-linked

(30) Priorité: 09.08.2012 FR 1257743
(43) Date de publication de la demande: 12.02.2014
(73) Titulaire: Nexans, 75008 Paris (FR)
(72) Inventeur: Petitet, Laurent, 42330 SAINT GALMIER (FR); Kensicher, Christèle, 69007 LYON (FR)
(74) Mandataire: Peguet, Wilfried

(56) Documents cités:
- EP-A2- 0 251 161
- WO-A1-86/04594
- US-A- 5 514 312

## Description

La présente invention se rapporte à un procédé de préparation d'une composition polymère chargée destinée à être réticulée, ainsi qu'à un procédé de réticulation de ladite composition polymère chargée.

Elle s'applique typiquement, mais non exclusivement, à la fabrication d'articles réticulés du type élément d'isolation ou de protection pour câble électrique et/ou optique, ou du type tube ou tuyau de canalisation pour le transport de fluides tels que de l'eau, du pétrole ou du gaz.

La technique actuelle pour préparer une composition polymère chargée, notamment avec des charges ignifugeantes, est le procédé « Sioplas » bien connu de l'homme du métier.

Dans ce procédé, la première étape consiste à mélanger dans un premier mélangeur une polyoléfine avec un vinyle silane et un peroxyde de dicumyle, afin d'obtenir une polyoléfine greffée silane. Cette première étape est réalisée à une température relativement élevée pour pouvoir décomposer le peroxyde de dicumyle et obtenir ainsi ladite polyoléfine greffée silane.

La seconde étape consiste à mélanger dans un second mélangeur la polyoléfine greffée silane avec des charges ignifugeantes telles que par exemple des hydroxydes métalliques. Cette seconde étape est réalisée à une température moins élevée que celle de la première étape pour ne pas décomposer les charges ignifugeantes. Cette seconde étape permet d'obtenir ladite composition polymère chargée destinée à être réticulée.

La réticulation de ladite composition polymère chargée peut être ensuite réalisée par des techniques bien connues de l'homme du métier.

Toutefois, ce procédé en deux étapes bien distinctes, nécessaire pour préparer des compositions polymères chargées destinées à être réticulées, est un procédé long et complexe.

Le but de la présente invention est de pallier les inconvénients des techniques de l'art antérieur en proposant notamment un procédé de préparation d'une composition polymère chargée destinée à être réticulée, comprenant au moins une charge inorganique, facile à mettre en oeuvre et optimisant le temps de production, tout en préservant les propriétés intrinsèques de ladite charge inorganique.

La présente invention a pour objet un procédé de préparation d'une composition polymère chargée destinée à être réticulée, **caractérisé en ce qu'il** comprend les étapes suivantes :
i. mélanger une composition comprenant un polymère organique, et au moins une charge inorganique,
ii. ajouter au mélange de l'étape précédente, un composé silane et un composé générateur de radicaux libres sous l'action de la chaleur, le composé générateur de radicaux libres ayant une température de décomposition inférieure à la température de décomposition de la charge inorganique, et
iii. greffer le composé silane au polymère organique, afin d'obtenir ladite composition polymère chargée destinée à être réticulée.

L'étape i est une étape de préparation d'une composition comprenant un polymère organique et au moins une charge inorganique, cette étape de préparation comprenant les deux sous-étapes suivantes :
i.a mélanger le polymère organique et une première partie de la charge inorganique, et
i.b mélanger une deuxième partie de la charge inorganique avec le mélange obtenu à l'étape i.a.

La composition polymère chargée destinée à être réticulée comprend ainsi le polymère organique auquel a été greffé le composé silane (i.e. polymère greffé silane), et la charge inorganique.

Le procédé de préparation selon l'invention fait donc référence à un procédé Sioplas réalisé en « une seule étape », les étapes i, ii et iii pouvant être avantageusement réalisées à l'aide d'un seul et unique mélangeur.

La présente invention est donc facile à mettre en oeuvre et permet de préserver les propriétés intrinsèques de ladite charge inorganique.

Dans la présente invention, on entend par « température de décomposition du composé générateur de radicaux libres » la température à laquelle ledit composé va générer des radicaux libres afin d'initier la réaction de greffage.

La température de décomposition du composé générateur de radicaux libres, notamment du type peroxyde organique, est classiquement déterminée par sa cinétique de décomposition thermique.

Cette température de décomposition est fonction du temps de demi-vie du composé générateur de radicaux libres. Ce temps de demi-vie (ou temps de demi-réaction) correspond à la durée au bout de laquelle 50 % du peroxyde est décomposé à une température donnée. Ainsi, dans la présente invention, la température de décomposition de la charge inorganique devra être supérieure à la température de décomposition du composé générateur de radicaux libres qui est fonction du temps de demi-vie (i.e. température de décomposition du composé générateur de radicaux libres).

La cinétique de décomposition thermique du composé générateur de radicaux libres est typiquement fournie par le fabricant dudit composé générateur de radicaux libres. Elle comporte un graphique où le temps de demi-vie est exprimé en fonction de la température de décomposition. L'homme du métier pourra ensuite se servir simplement de l'équation de la droite pour déterminer soit la température décomposition, soit le temps de demi-vie le plus adéquate au regard de la composition de l'invention.

Le composé générateur de radicaux libres peut être choisi en fonction de différents paramètres afin de préserver les propriétés intrinsèques de ladite charge inorganique. Ces paramètres sont adaptés en fonction de la température de décomposition du composé générateur de radicaux libres, et peuvent être notamment :
- le temps de résidence dans le mélangeur de la composition comprenant le composé générateur de radicaux libres, et/ou
- la température de mélange de ladite composition comprenant le composé générateur de radicaux libres, et/ou
- la viscosité de la composition comprenant le composé générateur de radicaux libres, et/ou
- le taux de cisaillement dans le mélangeur auquel est soumise la composition comprenant le composé générateur de radicaux libres.

L'homme du métier pourra facilement réaliser des essais pour optimiser le choix du composé générateur de radicaux libres au regard de la charge inorganique en fonction desdits paramètres mentionnés ci-dessus.

A titre d'exemple, si la température de décomposition de la charge inorganique est de 165°C, l'homme du métier pourra choisir le tert-butyl peroxybenzoate qui a un temps de demi-vie de 0,1 heure à une température de décomposition de 142°C, ou le peroxyde de dicumyle (DCP) qui a un temps de demi-vie de 1 heure à une température de 137°C.

Ceci étant, si l'homme du métier souhaite utiliser le peroxyde de dicumyle (DCP) avec une cinétique de décomposition plus rapide dans le temps, il pourra jouer sur le temps de résidence dans le mélangeur de la composition comprenant le composé générateur de radicaux libres, entre la zone d'introduction du composé générateur de radicaux libres dans le mélangeur et l'extrémité de sortie du mélangeur.

Si le temps de résidence n'est pas optimisé, le DCP ne pourra pas être utilisé puisque le peroxyde de dicumyle a un temps de demi-vie de 1 minute à une température de décomposition de 178°C : à 178°C, la température de décomposition de la charge inorganique serait typiquement inférieure à la température de décomposition du composé générateur de radicaux libres.

De préférence, la température de décomposition du composé générateur de radicaux libres à considérer dans la présente invention sera celle avec un temps de demi-vie de 0,1 heure.

La décomposition du composé générateur de radicaux libres pouvant être exothermique, l'homme du métier prendra bien entendu en considération le risque d'une augmentation brutal de la température du milieu réactionnel, lorsqu'il choisira son composé générateur de radicaux libres, afin d'éviter d'un début de décomposition de la charge inorganique.

Dans la présente invention, on entend par « température de décomposition de la charge inorganique » la température à laquelle la charge inorganique commence à se dégrader thermiquement en perdant au moins une partie de ses propriétés intrinsèques. Ainsi, la température de décomposition de la charge inorganique est plus particulièrement la température à laquelle ladite charge a perdu 5% en poids de sa masse initiale.

L'analyse thermogravimétrique (ATG) est classiquement utilisée pour identifier une telle température de décomposition. Elle est typiquement réalisée de 20 à 900 °C, sous azote (N₂) à 10 °C/mn, puis de 900 à 1000 °C, sous air à 10°C/min.

A titre d'exemple, lorsque la charge inorganique est un hydroxyde métallique, la température de décomposition est la température à laquelle l'hydroxyde métallique commence à libérer de l'eau, en ayant perdu 5% en poids de sa masse initiale. Pour le tri-hydroxyde d'aluminium (Al(OH)₃), la température de décomposition est de 260°C. Pour le di-hydroxyde de magnésium (Mg(OH)₂), la température de décomposition est de 330°C.

Dans un mode de réalisation particulier, la température de l'étape i est inférieure à la température de décomposition de la charge inorganique.

La température de l'étape i est suffisante pour rendre malléable le polymère organique sans décomposer la charge inorganique notamment lorsqu'elle est du type charge ignifugeante apte à libérer des molécules d'eau sous l'action de la chaleur, et obtenir ainsi un mélange homogène de la charge inorganique au sein du polymère organique.

L'état dit « malléable » du polymère organique peut être l'état fondu dudit polymère lorsqu'il est thermoplastique, cet état fondu pouvant être classiquement atteint lorsque le polymère organique est chauffé à une température égale ou supérieure à sa température de fusion.

Dans un mode de réalisation particulier, la température de l'étape iii (i.e. étape de greffage) est suffisante pour décomposer le composé générateur de radicaux libres, sans décomposer la charge inorganique notamment lorsqu'elle est du type charge ignifugeante apte à libérer des molécules d'eau sous l'action de la chaleur.

Cette température permet d'initier la réaction de greffage du composé silane sur le polymère organique.

Le polymère organique de l'étape i comprend une chaîne principale, comportant une séquence linéaire ou ramifiée d'unités constitutives, située entre deux groupements terminaux aux extrémités de ladite chaîne principale.

Plus particulièrement, le polymère organique n'est pas un polymère greffé silane, contrairement à celui obtenu à l'étape iii. En d'autres termes, le polymère organique de l'étape i ne comporte sensiblement pas de groupement silane hydrolysable greffé le long de sa chaîne principale, et de préférence il n'en comprend pas non plus à ses extrémités.

Le terme « polymère » en tant que tel signifie de façon générale homopolymère ou copolymère. Le polymère de l'invention peut donc être un homo- ou co-polymère, et peut être notamment un polymère thermoplastique ou un élastomère.

De préférence, le polymère organique est un polymère d'oléfine, ou en d'autres termes une polyoléfine.

Plus particulièrement, le polymère d'oléfine est un polymère d'éthylène ou de propylène.

A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), ou les terpolymères d'éthylène et de propylène (EPT) tels que par exemple les terpolymères d'éthylène propylène diène monomère (EPDM).

La composition de l'étape i peut bien entendu comprendre un ou plusieurs polymères organiques tels que décrits ci-avant.

En outre, elle peut comprendre ou non d'autres types de polymères, différents des polymères organiques de l'invention. Lorsque la composition réticulable de l'invention comprend d'autres types de polymères différents des polymères organiques de l'invention, elle peut se composer d'au moins 50 parties en poids de polymère organique de l'invention pour 100 parties en poids de polymère dans ladite composition, et de préférence d'au moins 80 parties en poids de polymère organique de l'invention pour 100 parties en poids de polymère dans ladite composition.

Lorsque la composition de l'étape i ne comprend pas d'autres types de polymères différents des polymères organiques de l'invention, elle se compose alors uniquement d'un ou de plusieurs polymères organiques de l'invention en tant que polymère dans ladite composition.

La charge inorganique de l'étape i peut être une charge ignifugeante : ces charges réduisent ou empêchent les phénomènes de combustion.

De préférence, la charge inorganique est une charge non halogénée.

De préférence, ladite charge ignifugeante est une charge ignifugeante apte à libérer des molécules d'eau sous l'action de la chaleur.

La charge inorganique de l'invention peut être un hydroxyde métallique, choisi notamment parmi le tri-hydroxyde d'aluminium (Al(OH)₃) et le di-hydroxyde de magnésium (Mg(OH)₂), ou un de leur mélange.

La composition de l'étape i peut comprendre au moins 100 parties en poids de charge inorganique pour 100 parties en poids de polymère(s) dans la composition, de préférence au moins 130 parties en poids de charge inorganique pour 100 parties en poids de polymère(s) dans la composition, et de préférence au moins 150 parties en poids de charge inorganique pour 100 parties en poids de polymère(s) dans la composition.

Elle peut en outre comprendre au plus 300 parties en poids de charge inorganique pour 100 parties en poids de polymère(s) dans la composition, et de préférence au plus 180 parties en poids de charge inorganique pour 100 parties en poids de polymère(s) dans la composition.

Plus particulièrement, la quantité de charge inorganique d'au plus 180 parties en poids permet de limiter avantageusement l'absorption par lesdites charges du composé générateur de radicaux libres et/ou du composé silane.

Dans l'étape i comprenant les deux sous-étapes i.a et i.b :
- la première partie de la charge inorganique (étape i.a) peut comprendre de 20 à 60 % en poids de la quantité totale de charge inorganique dans la composition de l'étape i, et de préférence peut être de 40 % en poids de la quantité totale de charge inorganique dans la composition de l'étape i, et
- la deuxième partie de la charge inorganique (étape i.b) peut comprendre de 80 à 40 % en poids de la quantité totale de charge inorganique dans la composition de l'étape i, et de préférence peut être de 60 % en poids de la quantité totale de charge inorganique dans la composition de l'étape i.

Ces deux sous-étapes i.a et i.b sont particulièrement avantageuses lorsque la composition de l'étape i comprend une quantité de charge inorganique élevée, notamment une quantité de charge inorganique d'au moins 100 parties en poids de charge inorganique pour 100 parties en poids de polymère(s) dans la composition, de préférence au moins 130 parties en poids de charge inorganique pour 100 parties en poids de polymère(s) dans la composition, de préférence au moins 150 parties en poids de charge inorganique pour 100 parties en poids de polymère(s) dans la composition, et de préférence plus de 200 parties en poids de charge inorganique pour 100 parties en poids de polymère(s) dans la composition.

Le composé silane de l'étape ii est un composé permettant de greffer des groupements silane hydrolysables sur la chaîne principale du polymère organique de l'étape i, et ainsi obtenir le polymère greffé silane de l'étape iii.

Le polymère greffé silane de l'étape iii comprend alors des groupements silanes hydrolysables sur la chaîne principale du polymère organique, et de préférence, les extrémités de la chaîne principale dudit polymère organique ne comportent pas de groupements silane hydrolysables.

Le composé silane, bien connu de l'homme du métier, peut comprendre au moins une fonction insaturée et au moins un groupement hydrolysable, de préférence deux groupements hydrolysables (identiques ou différents), et de façon particulièrement préférée trois groupements hydrolysables (identiques ou différents).

Les groupements hydrolysables du polymère de l'invention peuvent être des groupements alcoxysilanes et/ou des groupements carboxysilanes, de préférence des groupements alcoxysilanes.

A titre d'exemple, on peut citer comme alcoxysilane, le vinyl trimethoxy silane, le vinyltriéthoxy silane, ou le vinyl tris(2-méthoxyéthoxy) silane.

Le composé générateur de radicaux libres sous l'action de la chaleur de l'étape ii est destiné à initier la réaction de greffage du composé silane sur le polymère organique et à ainsi greffer le silane à la polyoléfine.

Le composé générateur de radicaux libres peut être choisi parmi le ter-butyl peroxybenzoate, le 2,5-dimethyl-2,5-di(ter-butylperoxy)-3-hexyne, le 2,5-dimethyl-2,5-di(terbutylperoxy)-hexane, le di-ter-butylperoxyde, le di(2-ter-butylperoxypropyl-(2))-benzene, le OO-tert-Butyl O-2-(ethylhexyl) monoperoxycarbonate, et le peroxyde de dicumyle, ou un de leurs mélanges. Le composé générateur de radicaux libres préféré est le ter-butyl peroxybenzoate.

La composition obtenue à la suite de l'ajout du composé silane et du composé générateur de radicaux libres, de l'étape ii, peut comprendre :
- au moins 1,0 % en poids du composé silane, de préférence 2,0 en poids du composé silane, et
- au moins 0,05% en poids du composé générateur de radicaux libres, de préférence environ 1 % en poids du composé générateur de radicaux libres.

La composition polymère chargée destinée à être réticulée, de l'invention, peut comprendre d'autres composés bien connus de l'homme du métier, comme par exemple des charges renforçantes inertes et/ou des antioxydants.

A titres d'exemple, les charges renforçantes inertes peuvent être choisies parmi des fibres de verre, du mica, de la craie (CaCO₃), de la chaux (CaO), du talc, et de l'argile, ou un de leurs mélanges.

La composition de l'étape i peut ainsi comprendre en outre au moins une desdites charges renforçantes et/ou au moins un antioxydant.

Dans un mode de réalisation particulier, la composition de l'étape i peut comprendre au plus 180 parties en poids de charge(s) (i.e. charge inorganique et charge renforçante) pour 100 parties en poids de polymère(s) dans la composition. Ladite quantité de charge inorganique d'au plus 180 parties en poids permet de limiter avantageusement l'absorption par lesdites charges du composé générateur de radicaux libres et/ou du composé silane.

Dans un mode de réalisation particulièrement préféré, la composition polymère chargée destinée à être réticulée, de l'invention, est dite « HFFR » pour l'anglicisme « *Halogen-Free Flame Retardant* ». Par conséquent, les éléments qui composent ladite composition ne comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Dans un mode de réalisation particulièrement avantageux, les étapes i, ii et iii sont réalisées en utilisant un même mélangeur, ledit mélangeur étant un mélangeur longitudinal à vis comprenant plusieurs zones d'introduction de matériaux et plusieurs zones de chauffe le long du mélangeur, ainsi qu'une extrémité de sortie.

Ledit mélangeur peut comprendre au moins une vis. Lorsque le mélangeur comprend uniquement une vis, on parle alors de mélangeur monovis. Lorsque le mélangeur comprend deux vis, on parle alors de mélangeur bis-vis. On préférera utiliser un mélangeur monovis, qui permet d'avoir avantageusement un taux de cisaillement moins important que celui d'un mélangeur bis-vis.

On peut dire que le procédé de préparation de l'invention est ainsi réalisé en continu. Plus particulièrement, le mélangeur de la présente invention est de préférence un mélangeur continu, et de façon particulièrement préférée, les étapes i, ii et iii sont réalisées en continu (i.e. mélange en continu).

Le mélangeur longitudinal à vis est en d'autres termes un mélangeur avec un axe longitudinal défini par la vis.

L'ajout du composé silane et du composé générateur de radicaux libres (étape ii) peut être réalisé au niveau d'une première zone d'introduction positionnée le long du mélangeur, notamment à l'aide d'un premier dispositif d'introduction.

A titre d'exemple, notamment lorsque le composé silane et le composé générateur de radicaux libres sont sous forme liquide, le premier dispositif d'introduction est un injecteur.

De préférence, la première zone d'introduction est à une distance d'au moins 2 fois le diamètre de la vis à partir de l'extrémité de sortie du mélangeur. Cette limite inférieure permet d'optimiser le greffage du composé silane au polymère organique.

De préférence, la première zone d'introduction est à une distance d'au moins 4 fois le diamètre de la vis à partir de l'extrémité de sortie du mélangeur.

Une première zone de chauffe (ou zone de greffage) peut être définie entre ladite première zone d'introduction et l'extrémité de sortie du mélangeur, cette zone de chauffe permettant de greffer le composé silane au polymère organique (étape iii).

L'introduction du polymère organique (étape i) peut être réalisée au niveau d'une deuxième zone d'introduction positionnée le long du mélangeur, en amont de la première zone d'introduction, notamment à l'aide d'un deuxième dispositif d'introduction.

A titre d'exemple, le deuxième dispositif d'introduction est un doseur.

La deuxième zone d'introduction peut être avantageusement à une distance d'au moins 4 fois le diamètre de la vis à partir de la première zone d'introduction. Cette limite inférieure permet d'optimiser le mélange du polymère et de la charge inorganique.

De préférence, la deuxième zone d'introduction peut être à une distance d'au moins 8 fois le diamètre de la vis à partir de la première zone d'introduction.

Une deuxième zone de chauffe (ou zone de *« compoundage* ») peut être définie entre ladite deuxième zone d'introduction et ladite première zone d'introduction, cette zone de chauffe permettant d'homogénéiser le mélange entre le polymère organique et la charge inorganique (étape i).

Le flux de matière au sein du mélangeur va ainsi de la deuxième zone d'introduction vers la première zone d'introduction.

Selon un mode préféré de réalisation, l'introduction de la charge inorganique (étape i) est réalisée au niveau de ladite deuxième zone d'introduction et au niveau d'une troisième zone d'introduction positionnée le long du mélangeur, entre la deuxième zone d'introduction et la première zone d'introduction, notamment à l'aide d'un troisième dispositif d'introduction.

A titre d'exemple, le troisième dispositif d'introduction est un doseur.

La troisième zone d'introduction peut être avantageusement à une distance d'au moins 4 fois le diamètre de la vis à partir de la première zone d'introduction. Cette limite inférieure permet d'optimiser le mélange du polymère et de la charge inorganique.

De préférence, la troisième zone d'introduction peut être à une distance d'au moins 6 fois le diamètre de la vis à partir de la première zone d'introduction.

Plus particulièrement, la troisième zone d'introduction peut être à une distance d'au moins 2 fois le diamètre de la vis à partir de la deuxième zone d'introduction. De préférence, la troisième zone d'introduction peut être à une distance d'au moins 4 fois le diamètre de la vis à partir de la deuxième zone d'introduction.

Au regard du mode préféré de réalisation, l'étape i de la présente invention peut donc être réalisées en deux sous-étapes i.a et i.b, dans lesquelles la charge inorganique est mélangée en deux parties au polymère organique.

Plus particulièrement, dans la première sous-étape i.a, la composition comprenant ledit polymère organique et la première partie de la charge inorganique est mélangée. Puis, dans la seconde sous-étape i.b, la deuxième partie de la charge inorganique est ajoutée au mélange de l'étape i.a.

La distance entre la deuxième zone d'introduction et la troisième zone d'introduction peut avoir une incidence directe sur la qualité de la dispersion de la charge inorganique dans le polymère. Cette distance dépend notamment de la répartition de la charge ignifugeante entre le deuxième dispositif d'introduction et le troisième dispositif d'introduction, mais aussi de la température et de la géométrie de vis choisie entre ces deux zones d'introduction.

Le procédé de préparation de l'invention peut en outre comprendre le dégazage de la composition de l'étape i. Celui-ci a notamment pour rôle de déshydrater le milieu réactionnel afin d'éviter l'hydrolyse partielle du composé silane et la décomposition du composé générateur de radicaux libres. Il permet également de faciliter l'incorporation des charges par une diminution du volume mort (i.e. remplacement de l'air contenu dans le mélangeur par de la matière).

Le mélangeur peut comprendre une zone de dégazage positionnée le long du mélangeur entre la deuxième zone d'introduction et la première zone d'introduction, cette zone de dégazage pouvant être reliée à une pompe à vide.

Lorsque le mélangeur comprend ladite troisième zone d'introduction, il est préférable que ladite zone de dégazage soit positionnée le long du mélangeur entre la troisième zone d'introduction et la première zone d'introduction.

Dans un mode de réalisation particulièrement avantageux, la composition polymère chargée obtenue à l'étape iii, ne comprend sensiblement pas de catalyseur de réticulation, tel que par exemple un catalyseur à base d'étain.

Ainsi, la composition polymère chargée obtenue à l'étape iii est une composition dite « non réticulée » ou en d'autres termes une composition dont le taux de gel selon la norme ASTM D2765-01 est d'au plus 20%, de préférence d'au plus 10%, de préférence d'au plus 5%, et de façon particulièrement préférée de 0%.

Ainsi, la composition polymère chargée obtenue à l'étape iii peut être avantageusement mise sous forme de granulés. Ces granulés peuvent être facilement stockés avant toute étape de réticulation ultérieure. Le procédé de l'invention est donc particulièrement avantageux dès lors que l'étape de réticulation de la composition polymère chargée ne suit pas directement en continue l'étape iii.

Un autre objet de l'invention est un procédé de réticulation d'une composition polymère chargée obtenue par le procédé de préparation tel que défini précédemment, **caractérisé en ce qu'il** comprend en outre l'étape iv de réticuler la composition polymère chargée destinée à être réticulée, obtenue à l'étape iii.

L'étape iv de réticulation se fait de préférence en présence d'humidité, l'humidité pouvant être par exemple une atmosphère humide ou une immersion dans de l'eau.

L'étape iv de réticulation peut notamment comprendre l'ajout d'un catalyseur de réticulation, par exemple un catalyseur à base d'étain, à la composition polymère chargée destinée à être réticulée, obtenue à l'étape iii.

Plus particulièrement, le procédé de réticulation d'une composition polymère chargée obtenue par le procédé de préparation tel que défini précédemment, peut comprendre les étapes suivantes, postérieure à l'étape iii :
iii'. mettre sous forme de granulés la composition polymère chargée obtenue à l'étape iii,
iv'. mélanger les granulés obtenu à l'étape iii' avec un catalyseur de réticulation, pour obtenir un mélange réticulable, et
iv". réticuler le mélange réticulable obtenir à l'étape iv'.

L'étape iii' de formation des granulés peut être classiquement réalisée par des techniques bien connues de l'homme du métier. A titre d'exemple, la composition polymère chargée obtenue à l'étape iii peut passer à travers une plaque à trous (i.e. filière à trous) comportant un système de coupe pour former les granulés, notamment par l'intermédiaire d'une extrudeuse dite « extrudeuse de reprise », directement connectée à l'extrémité de sortie du mélangeur de l'invention. Puis, les granulés formés sont immédiatement refroidis, notamment par de l'eau et/ou de l'air, séparés par un séparateur, et enfin séchés.

L'étape iv' peut être classiquement réalisée à l'aide d'une extrudeuse monovis. L'étape iv' de mélange est notamment une étape dans laquelle la température est suffisante pour rendre les granulés malléables, notamment à l'état fondu (e.g. température égale ou supérieure à la température de fusion du polymère organique), sans décomposer la charge inorganique notamment lorsqu'elle est du type charge ignifugeante apte à libérer des molécules d'eau sous l'action de la chaleur. Le mélange réticulable peut être extrudé, avant d'être réticulé.

L'état dit « malléable » du polymère organique peut être l'état fondu dudit polymère lorsqu'il est thermoplastique, cet état fondu pouvant être classiquement atteint lorsque le polymère organique est chauffé à une température égale ou supérieure à sa température de fusion.

L'étape iv" peut être classiquement réalisée en présence d'humidité, l'humidité pouvant être par exemple une atmosphère humide ou une immersion dans de l'eau. A titre d'exemple, lorsque le mélange réticulable de l'étape iv' est extrudé, on peut plonger l'extrudât obtenu dans de l'eau pour obtenir sa réticulation.

Dans la présente invention, on entend par « réticulé » un taux de gel, selon la norme ASTM D2765-01, d'au moins 40%, de préférence d'au moins 50%, de préférence d'au moins 60%, et de façon particulièrement préférée d'au moins 70%.

Un autre objet de l'invention concerne un article réticulé obtenu à partir de la composition polymère chargée réticulée, de l'invention.

Cet article réticulé peut être sous forme :
- d'un élément pour câble électrique et/ou optique, comme par exemple un élément de bourrage, une couche électriquement isolante et/ou une gaine de protection, ou
- d'un tube ou d'un tuyau, comme par exemple des canalisations pour le chauffage hydronique, des conduites d'alimentation d'eau, des canalisations pour le transport du gaz ou de pétrole pour les installations off-shore, ..etc.

D'autres caractéristiques et avantages de la présente invention apparaîtront à la lumière des exemples qui vont suivre en référence à la figure unique annotée, lesdits exemples et figure étant donnés à titre illustratif et nullement limitatif.

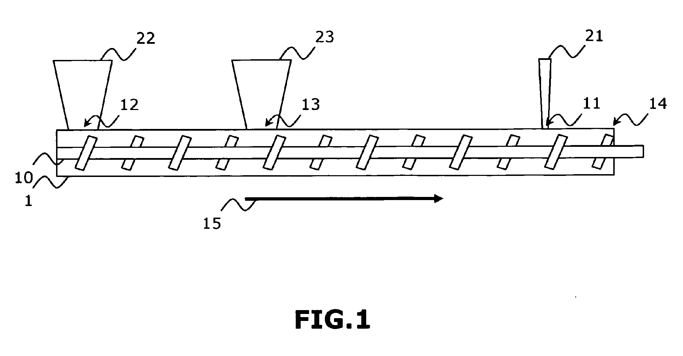

La figure 1 représente une vue schématique d'un mélangeur longitudinal à vis, pour préparer la composition polymère chargée destinée à être réticulée de la présente invention.

Pour des raisons de clarté, seuls les éléments essentiels pour la compréhension de l'invention ont été représentés de manière schématique, et ceci sans respect de l'échelle.

La figure 1 représente un mélangeur 1 longitudinal à vis comprenant une monovis 10 s'étendant à l'intérieur du mélangeur 1.

Le mélangeur 1 comprend trois zones d'introduction de matériaux.

L'ajout du composé silane et du composé générateur de radicaux libres (étape ii) est réalisé au niveau d'une première zone 11 d'introduction positionnée le long du mélangeur. Cet ajout est réalisé à l'aide d'un premier dispositif 21 d'introduction positionné le long de mélangeur 1.

Le mélange du polymère organique et de la charge inorganique (étape i) est réalisé en deux sous-étapes (i.a et i.b), dans lesquelles la charge inorganique est mélangée en deux parties au polymère organique.

On introduit dans une deuxième zone 12 d'introduction, en tête du mélangeur 1, et donc en amont de la première zone d'introduction 11, le polymère organique et la première partie de la charge inorganique (étape i.a). Cette introduction est réalisée à l'aide d'un deuxième dispositif 22 d'introduction positionné le long du mélangeur 1.

Ensuite, la deuxième partie de la charge inorganique est ajouté au mélange ainsi formé au niveau d'une troisième zone 13 d'introduction positionnée entre la deuxième zone 12 d'introduction et la première zone 11 d'introduction (étape i.b). Cet ajout est réalisé à l'aide d'un troisième dispositif 23 d'introduction positionné le long du mélangeur 1

Le mélangeur 1 comprend en outre plusieurs zones de chauffe (non représentées) le long du mélangeur, ainsi qu'une extrémité de sortie 14.

La flèche 15 représente le flux de matière au sein du mélangeur 1, ledit flux allant ainsi de la deuxième zone 12 d'introduction vers la première zone 11 d'introduction, direction l'extrémité de sortie 14 du mélangeur 1.

Bien entendu, dans un autre mode de réalisation non représenté, seules les première et deuxième zones d'introduction peuvent être utilisées, toute la charge inorganique étant introduite au niveau de la deuxième zone d'introduction.

Une première zone de chauffe (ou zone de greffage) est définie entre la première zone 11 d'introduction et l'extrémité de sortie 14 du mélangeur, cette zone de chauffe permettant de greffer le composé silane au polymère organique (étape iii).

Une deuxième zone de chauffe (ou zone de *« compoundage* ») est définie entre la deuxième zone 12 d'introduction et la première zone 11 d'introduction, cette zone de chauffe permettant d'homogénéiser le mélange entre le polymère organique et la charge inorganique (étape i incluant les étapes i.a et i.b).

### Exemples

Différents essais ont été réalisés pour comparer les propriétés de compositions réticulées ayant été obtenues par le procédé selon la présente invention tel que décrit en relation avec la figure 1, et par le procédé Sioplas de l'art antérieur.

Pour le procédé selon l'invention faisant référence à la figure 1, un mélangeur monovis, commercialisé par la société BUSS AG sous la référence PR46, a été utilisé.

Ce mélangeur a une vis d'un diamètre (D) de 46 mm et d'une longueur de 690 mm (I), soit un rapport I/D de 15.

La distance entre la première zone 11 d'introduction et l'extrémité de sortie 14 est d'environ 4D (i.e. 184 mm).

La distance entre la deuxième zone 12 d'introduction et la première zone 11 d'introduction est d'environ 11 D (i.e. 506 mm).

La distance entre la deuxième zone 12 d'introduction et la troisième zone 13 d'introduction est d'environ 5D (i.e. 230 mm).

Bien entendu, les distances séparant les première, deuxième et troisième zones d'introduction peuvent varier.

A titre d'exemple, et pour le mélangeur précité, la distance entre la première zone 11 d'introduction et l'extrémité de sortie 14 peut aller de 1 D (i.e. 46 mm) à 4D (i.e. 184 mm), et donc celle entre la deuxième zone 12 d'introduction et la première zone 11 d'introduction peut aller de 11D (i.e. 506 mm) à 14D (i.e. 644 mm).

Les deuxième et troisième dispositifs 22, 23 d'introduction sont des doseurs, et le premier dispositif 21 d'introduction est un injecteur.

Le deuxième dispositif 22 d'introduction comprend la première partie de la charge inorganique correspondant à 40% en poids de ladite charge, et le troisième dispositif 23 d'introduction comprend la deuxième partie de la charge inorganique correspondant à 60% en poids de ladite charge.

Pour le procédé Sioplas de l'art antérieur, un premier mélangeur commercialisé par la société COPERI ON VERNER sous la référence ZSK 30, et un deuxième mélangeur commercialisé par la société BUSS AG sous la référence PR46, ont été utilisés.

L'origine des constituants utilisés pour lesdits essais est la suivante :
- Copolymère d'éthylène-octène (polymère organique sous forme de granulés) commercialisé par la société DOW sous la référence ENGAGE 8450 ;
- Polypropylène (polymère organique sous forme de granulés) commercialisé par la société LYONDELL BASELL sous la référence MOPLEN RP315M ;
- Copolymère d'éthylène et d'acétate de vinyle (polymère organique sous forme de granulés) commercialisé par la société DUPONT sous la référence ELVAX 40L03 ;
- Vinyl triméthoxy silane (composé silane sous forme liquide) commercialisé par la société DEGUSSA sous la référence DYNASYLAN VTMO ;
- Ter-butyl peroxybenzoate (composé générateur de radicaux libres sous forme liquide) commercialisé par la société Akzo Nobel, sous la référence Trigonox^{®} C, dont la température de décomposition est de 142°C pour un temps de demi-vie de 0,1 heure ;
- Peroxyde de dicumyle commercialisé par la société ARKEMA sous la référence Di-Cup, dont la température de décomposition est de 156°C pour un temps de demi-vie de 0,1 heure ;
- Trihydroxyde d'aluminium (charge inorganique sous forme solide) commercialisé par la société ALBEMARLE sous la référence MARTI NAL OL104 WE, dont la température de décomposition est de 260°C (température de décomposition mesurée par ATG lorsque ladite charge inorganique a perdu 5% en poids de sa masse initiale);
- Antioxydant sous forme solide, commercialisé par la société CIBA sous la référence IRGANOX 1010.

### Essais 1

Le tableau 1 ci-dessous rassemble les différents composés utilisés dans la préparation d'une composition polymère chargée destinée à être réticulée, selon l'invention et selon le procédé Sioplas de l'art antérieur, ce type de composition étant destiné à être utilisé en tant que couche électriquement isolante pour câble électrique et/ou optique.

**Tableau 1**

| **Composition** | **Selon l'invention (en % en poids)** | **Selon l'art antérieur (% en poids)** |
|---|---|---|
| Copolymère d'éthylène-octène | 22.76 | 22.89 |
| Polypropylène | 15.17 | 15.25 |
| Vinyl trimethoxy silane | 1.54 | 1.04 |
| Ter-butyl peroxybenzoate | 0.1 | / |
| Peroxyde de dicumyle | / | 0.03 |
| Trihydroxyde d'aluminium | 58.48 | 58.83 |
| Antioxydant | 1.95 | 1.96 |
| **Total** | **100.00** | **100.00** |

Selon le procédé de préparation de l'invention, les constituants de la composition sont introduits selon le mode de réalisation décrit dans la figure 1 et détaillé dans le tableau 2 ci-dessous.

**Tableau 2**

| **Composition** | **Dispositif d'introduction utilisé, relatif à la** **figure 1** **(un seul et unique mélangeur)** |
|---|---|
| Copolymère d'éthylène-octène | Doseur 22 |
| Polypropylène | Doseur 22 |
| Vinyl trimethoxy silane | Injecteur 21 |
| Ter-butyl peroxybenzoate | Injecteur 21 |
| Trihydroxyde d'aluminium | Doseur 22 (40% en poids) et Doseur 23 (60% en poids) |
| Antioxydant | Doseur 23 |

Au sein du mélangeur, la zone de chauffe comprise entre la deuxième zone 12 d'introduction et la première zone 11 d'introduction comprend une température de l'ordre de 165°C.

La zone de chauffe comprise entre la première zone 11 d'introduction et l'extrémité 14 de sortie comprend une température de l'ordre de 175°C.

Selon le procédé Sioplas de l'art antérieur, on forme tout d'abord dans le premier mélangeur, le polymère greffé silane en mélangeant et en faisant réagir à une température de 220±10°C, le copolymère d'éthylene-octène, le polypropylene, le vinyl trimethoxy silane et le peroxyde de dicumyle.

Puis, dans le deuxième mélangeur, on mélange, à une température permettant un ramollissement de la matrice polymérique, à savoir 180°C, au polymère greffé silane, le trihydroxyde d'aluminium et l'antioxydant.

Une fois que la composition polymère chargée destinée à être réticulée est préparée selon le procédé de l'invention ou selon le procédé Sioplas de l'art antérieur, on ajoute à la composition un catalyseur de réticulation à base d'étain, par exemple du type dilaurate de dibutyle étain, afin de l'extruder, puis on plonge l'extrudât dans une piscine pendant 24 heures à 63°C afin de réticuler ledit extrudât.

Le tableau 3 ci-dessous rassemble les différentes propriétés mesurées sur les compositions réticulées obtenues selon la présente invention et selon le procédé Sioplas de l'art antérieur.

**Tableau 3**

| | **Selon l'invention** | **Selon l'art antérieur** |
|---|---|---|
| Viscosité Mooney (Mu) ML_{4+4®170°C} | 17,4 | 17,0 |
| Hotsettestà 200°C selon IEC 60811-2-1 | OK | OK |
| Allongement sous charge | 50% | 25% |
| Allongement rémanent | 0% | 0% |
| Allongement rupture selon IEC 60811-1-1 | 116% | 115% |
| Resistance rupture selon IEC 60811-1-1 | 17,7MPa | 18,0MPa |

### Essais 2

Le tableau 4 ci-dessous rassemble les différents composés utilisés dans la préparation d'une composition polymère chargée destinée à être réticulée, selon l'invention et selon le procédé Sioplas de l'art antérieur, ce type de composition étant destiné à être utilisé en tant que gaine de protection pour câble électrique et/ou optique.

**Tableau 4**

| **Composition** | **Selon l'invention (en % en poids)** | **Selon l'art antérieur (en % en poids)** |
|---|---|---|
| Copolymère d'éthylène et d'acétate de vinyle | 34.15 | 34.45 |
| Vinyl trimethoxy silane | 0.85 | 0.56 |
| Ter-butyl peroxybenzoate | 0.03 | / |
| Peroxyde de dicumyle | / | 0.02 |
| Trihydroxyde d'aluminium | 63.05 | 63.05 |
| Antioxydant | 1.92 | 1.92 |
| **Total** | **100.00** | **100.00** |

Selon le procédé de préparation de l'invention, les constituants de la composition sont introduits selon le mode de réalisation décrit dans la figure 1 et détaillé dans le tableau 5 ci-dessous.

**Tableau 5**

| **Composition** | **Dispositif d'introduction utilisé, relatif à la** **figure 1** |
|---|---|
| Copolymère d'éthylène et d'acétate de vinyle | Doseur 22 |
| Vinyl trimethoxy silane | Injecteur 21 |
| Ter-butyl peroxybenzoate | Injecteur 21 |
| Trihydroxyde d'aluminium | Doseur 22 (40% en poids) et Doseur 23 (60% en poids) |
| Antioxydant | Doseur 23 |

Au sein du mélangeur, la zone de chauffe comprise entre la deuxième zone 12 d'introduction et la première zone 11 d'introduction comprend une température de l'ordre de 150± 10 °C.

La zone de chauffe comprise entre la première zone 11 d'introduction et l'extrémité 14 de sortie comprend une température de l'ordre de 170°C.

Selon le procédé Sioplas de l'art antérieur, on forme tout d'abord dans le premier mélangeur le polymère greffé silane en mélangeant et en faisant réagir à une température de l'ordre de 210±10°C, le copolymère d'éthylène et d'acétate de vinyle, le vinyl trimethoxy silane et le peroxyde de dicumyle.

Puis, dans le deuxième mélangeur, on mélange, à une température permettant un ramollissement de la matrice polymérique, à savoir 180°C (cf. température de changement d'état correspondant à la phase dite visco-fluide de cette matrice polymère), au polymère greffé silane, le trihydroxyde d'aluminium et l'antioxydant.

Une fois que la composition polymère chargée destinée à être réticulée est préparée selon le procédé de l'invention ou selon le procédé Sioplas de l'art antérieur, on ajoute à la composition un catalyseur de réticulation à base d'étain, par exemple du type dilaurate de dibutyle étain, afin de l'extruder, puis on plonge l'extrudât dans une piscine pendant 24 heures à 63°C afin de réticuler ledit extrudât.

Le tableau 6 ci-dessous rassemble les différentes propriétés mesurées sur les compositions réticulées obtenues selon la présente invention et selon le procédé Sioplas de l'art antérieur.

**Tableau 6**

| | **Selon l'invention** | **Selon l'art antérieur** |
|---|---|---|
| Vise osité Mooney (Mu)_{ML1+4@150°C} | 33.9 | 49 |
| Hot set test according to EN60811-2-1 | OK | OK |
| Allongement sous change | 35% | 20% |
| Allongement rémanent | -5% | -5% |
| Allongement rupture selon lEC 60811-1-1 | 240% | 200% |
| Δ Allongement rupture après IRM902 4h à 70°C selon IEC 60811-2-1 | 7 | 10 |
| Résistance rupture selon IEC 60811-2-1 | 8MPa | 9MPa |
| Δ Resistance rupture après IRM902 4h@70°C selon IEC 60811-2-1 | 19 | 16 |

Que ce soit au regard de l'Essai 1 ou de l'Essai 2, les résultats obtenus par le procédé selon l'invention et par le procédé selon le procédé Sioplas de l'art antérieur sont sensiblement identiques, le procédé selon l'invention présentant l'avantage d'être plus rapide et beaucoup plus simple à mettre en oeuvre.

## Revendications

1. Procédé de préparation d'une composition polymère chargée destinée à être réticulée, **caractérisé en ce qu'il** comprend les étapes suivantes :
i. préparer une composition comprenant un polymère organique, et au moins une charge inorganique, cette étape de préparation comprenant les deux sous-étapes suivantes :
i.a mélanger le polymère organique et une première partie de la charge inorganique, et
i.b mélanger une deuxième partie de la charge inorganique avec le mélange obtenu à l'étape i.a,
ii. ajouter au mélange de l'étape précédente, un composé silane et un composé générateur de radicaux libres sous l'action de la chaleur, le composé générateur de radicaux libres ayant une température de décomposition inférieure à la température de décomposition de la charge inorganique, et
iii. greffer le composé silane au polymère organique, afin d'obtenir ladite composition polymère chargée destinée à être réticulée.

2. Procédé selon la revendication 1, **caractérisé en ce que** la température de l'étape i est inférieure à la température de décomposition de la charge inorganique.

3. Procédé selon l'une quelconque des revendications précédentes, **caractérisé en ce que** la température de l'étape iii est suffisante pour décomposer le composé générateur de radicaux libres, et inférieure à la température de décomposition de la charge inorganique.

4. Procédé selon l'une quelconque des revendications précédentes, **caractérisé en ce que** le polymère organique est un polymère d'oléfine, et de préférence un polymère d'éthylène.

5. Procédé selon l'une quelconque des revendications précédentes, **caractérisé en ce que** la charge inorganique est une charge ignifugeante.

6. Procédé selon la revendication 5, **caractérisé en ce que** la charge ignifugeante est un hydroxyde métallique.

7. Procédé selon la revendication 5 ou 6, **caractérisé en ce que** l'hydroxyde métallique est choisi parmi le tri-hydroxyde d'aluminium (ATH) et le di-hydroxyde de magnésium (MDH), ou un de leur mélange.

8. Procédé selon l'une quelconque des revendications précédentes, **caractérisé en ce que** le composé silane est un vinyle alcoxysilane ou un carboxysilane.

9. Procédé selon l'une quelconque des revendications précédentes, **caractérisé en ce que** le composé générateur de radicaux libres est choisi parmi le ter-butyl peroxybenzoate, le 2,5-dimethyl-2,5-di(ter-butylperoxy)-3-hexyne, le 2,5-dimethyl-2,5-di(terbutylperoxy)-hexane, le di-ter-butylperoxyde, le di(2-ter-butylperoxypropyl-(2))-benzene, le OO-tert-Butyl O-2-(ethylhexyl) monoperoxycarbonate, et le peroxyde de dicumyle, ou un de leurs mélanges.

10. Procédé selon l'une quelconque des revendications précédentes, **caractérisé en ce que** les étapes i, ii et iii sont réalisées en utilisant un même mélangeur (1), ledit mélangeur étant un mélangeur longitudinal à vis (10) comprenant plusieurs zones d'introduction (11, 12, 13) de matériaux et plusieurs zones de chauffe le long du mélangeur (1), ainsi qu'une extrémité de sortie (14).

11. Procédé selon la revendication 10, **caractérisé en ce que** l'ajout du composé silane et du composé générateur de radicaux libres est réalisé au niveau d'une première zone (11) d'introduction positionnée le long du mélangeur (1).

12. Procédé selon la revendication 11, **caractérisé en ce que** la première zone (11) d'introduction est à une distance d'au moins 2 fois le diamètre de la vis à partir de l'extrémité de sortie (14) du mélangeur.

13. Procédé selon l'une quelconque des revendications 10 à 12, **caractérisé en ce que** l'introduction du polymère organique est réalisée au niveau d'une deuxième zone (12) d'introduction positionnée le long du mélangeur (1), en amont de la première zone (11) d'introduction.

14. Procédé selon la revendication 13, **caractérisé en ce que** la deuxième zone d'introduction est à une distance d'au moins 4 fois le diamètre de la vis à partir de la première zone d'introduction.

15. Procédé selon la revendication 13 ou 14, **caractérisé en ce que** l'introduction de la charge inorganique est réalisée au niveau de la deuxième zone (12) d'introduction.

16. Procédé selon la revendication 13, **caractérisé en ce que** l'introduction de la charge inorganique est réalisée au niveau de la deuxième zone (12) d'introduction et au niveau d'une troisième zone (13) d'introduction positionnée le long du mélangeur (1), entre la deuxième zone (12) d'introduction et la première zone (11) d'introduction.

17. Procédé selon la revendication 16, **caractérisé en ce que** la troisième zone d'introduction est à une distance d'au moins 4 fois le diamètre de la vis à partir de la première zone d'introduction.

18. Procédé selon la revendication 16 ou 17, **caractérisé en ce que** la troisième zone d'introduction est à une distance d'au moins 2 fois le diamètre de la vis à partir de la deuxième zone d'introduction.

19. Procédé selon l'une quelconque des revendications précédentes, **caractérisé en ce que** l'étape i comprend le dégazage de la composition.

20. Procédé selon l'une quelconque des revendications précédentes, **caractérisé en ce que** la composition polymère chargée obtenue à l'étape iii, ne comprend sensiblement pas de catalyseur de réticulation.

21. Procédé selon l'une quelconque des revendications précédentes, **caractérisé en ce que** la composition polymère chargée obtenue à l'étape iii est mise sous forme de granulés.

22. Procédé de réticulation d'une composition polymère chargée obtenue par le procédé de préparation tel que défini aux revendications 1 à 21, **caractérisé en ce qu'il** comprend en outre l'étape iv de réticuler la composition polymère chargée destinée à être réticulée, obtenue à l'étape iii.

## Patentansprüche

1. Verfahren zur Herstellung einer beladenen Polymerzusammensetzung, die bestimmt ist, vernetzt zu sein, **dadurch gekennzeichnet, dass** es die folgenden Schritte umfasst:
i. Herstellen einer Zusammensetzung, die ein organisches Polymer und mindestens eine anorganische Charge umfasst, wobei dieser Vorbereitungsschritt die folgenden zwei Unterschritte umfasst:
i.a Mischen des organischen Polymers und eines ersten Teils der anorganischen Charge, und
i.b Mischen eines zweiten Teils der anorganischen Charge mit dem Gemisch aus Schritt i.a,
ii. Hinzufügen einer Silanverbindung und einer unter dem Einfluss von Wärme freie Radikale erzeugenden Verbindung zu dem Gemisch des vorangehenden Schritts, wobei die freie Radikale erzeugende Verbindung eine Zerfallstemperatur hat, die niedriger als die Zerfallstemperatur der anorganischen Charge ist, und
iii. Propfen der Silanverbindung auf das organische Polymer, um die beladene Polymerzusammensetzung zu erhalten, die bestimmt ist, vernetzt zu sein.

2. Verfahren nach Anspruch 1, **dadurch gekennzeichnet, dass** die Temperatur von Schritt i niedriger als die Zerfallstemperatur der anorganischen Charge ist.

3. Verfahren nach einem der vorangehenden Ansprüche, **dadurch gekennzeichnet, dass** die Temperatur von Schritt iii ausreichend ist, um die freie Radikale erzeugende Verbindung zu zersetzen, und niedriger als die Zerfallstemperatur der anorganischen Charge.

4. Verfahren nach einem der vorangehenden Ansprüche, **dadurch gekennzeichnet, dass** das organische Polymer ein Olefinpolymer und vorzugsweise ein Ethylenpolymer ist.

5. Verfahren nach einem der vorangehenden Ansprüche, **dadurch gekennzeichnet, dass** die anorganische Charge eine flammwidrige Charge ist.

6. Verfahren nach Anspruch 5, **dadurch gekennzeichnet, dass** die flammwidrige Charge ein metallisches Hydroxid ist.

7. Verfahren nach Anspruch 5 oder 6, **dadurch gekennzeichnet, dass** das metallische Hydroxyd aus dem Aluminiumtrihydroxid (ATH) und dem Magnesiumdihydroxid (MDH) oder einem ihrer Gemische ausgewählt ist.

8. Verfahren nach einem der vorangehenden Ansprüche, **dadurch gekennzeichnet, dass** die Silanverbindung ein Vinylalcoxysilan oder ein Carboxysilan ist.

9. Verfahren nach einem der vorangehenden Ansprüche, **dadurch gekennzeichnet, dass** die freie Radikale erzeugende Verbindung aus dem Ter-butylperoxybenzoat, dem 2,5-Dimethyl-2,5-di(ter-butylperoxy)-3-hexyn, dem 2,5-Dimethyl-2,5-di(terbutylperoxy)-hexan, dem Di-ter-butylperoxid, dem Di(2-ter-butylperoxypropyl-(2))-benzen, dem OO-tert-Butyl O-2-(ethylhexyl) monoperoxycarbonat und dem Dicumylenperoxid oder einem ihrer Gemische ausgewählt ist.

10. Verfahren nach einem der vorangehenden Ansprüche, **dadurch gekennzeichnet, dass** die Schritte i, ii und iii unter Verwendung eines selben Mischers (1) hergestellt sind, wobei der Mischer ein Längsmischer mit Schraube (10) ist, der mehrere Einfüllzonen (11, 12, 13) für Materialien und mehrere Heizzonen entlang des Mischers (1) sowie ein Ausgangsende (14) hat.

11. Verfahren nach Anspruch 10, **dadurch gekennzeichnet, dass** das Hinzufügen der Silanverbindung und der freie Radikale erzeugenden Verbindung im Bereich einer ersten, entlang des Mischers (1) positionierten Einfüllzone (11) durchgeführt wird.

12. Verfahren nach Anspruch 11, **dadurch gekennzeichnet, dass** sich die erste Einfüllzone (11) in einem Abstand von mindestens dem Doppelten des Durchmessers der Schraube ab dem Ausgangsende (14) des Mischers befindet.

13. Verfahren nach einem der Ansprüche 10 bis 12, **dadurch gekennzeichnet, dass** das Einfüllen des organischen Polymers im Bereich einer zweiten Einfüllzone (12) erfolgt, die entlang des Mischers (1) der ersten Einfüllzone (11) vorgelagert positioniert ist.

14. Verfahren nach Anspruch 13, **dadurch gekennzeichnet, dass** sich die zweite Einfüllzone in einem Abstand von mindestens dem Vierfachen des Durchmessers der Schraube ab der ersten Einfüllzone befindet.

15. Verfahren nach Anspruch 13 oder 14, **dadurch gekennzeichnet, dass** das Einfüllen der anorganischen Charge im Bereich der zweiten Einfüllzone (12) durchgeführt wird.

16. Verfahren nach Anspruch 13, **dadurch gekennzeichnet, dass** das Einfüllen der anorganischen Charge im Bereich der zweiten Einfüllzone (12) und im Bereich einer dritten Einfüllzone (13) durchgeführt wird, die entlang des Mischers (1) zwischen der zweiten Einfüllzone (12) und der ersten Einfüllzone (11) positioniert ist.

17. Verfahren nach Anspruch 16, **dadurch gekennzeichnet, dass** sich die dritte Einfüllzone in einem Abstand von mindestens dem Vierfachen des Durchmessers der Schraube ab der ersten Einfüllzone befindet.

18. Verfahren nach Anspruch 16 oder 17, **dadurch gekennzeichnet, dass** sich die dritte Einfüllzone in einem Abstand von mindestens dem Doppelten des Durchmessers der Schraube ab der zweiten Einfüllzone befindet.

19. Verfahren nach einem der vorangehenden Ansprüche, **dadurch gekennzeichnet, dass** der Schritt i die Entgasung der Zusammensetzung umfasst.

20. Verfahren nach einem der vorangehenden Ansprüche, **dadurch gekennzeichnet, dass** die beladene Polymerzusammensetzung aus Schritt iii im Wesentlichen keinen Vernetzungskatalysator umfasst.

21. Verfahren nach einem der vorangehenden Ansprüche, **dadurch gekennzeichnet, dass** die beladene Polymerzusammensetzung aus Schritt iii als Granulat geformt ist.

22. Vernetzungsverfahren einer beladenen Polymerzusammensetzung, die anhand des Herstellungsverfahrens nach den Ansprüchen 1 bis 21 hergestellt wird, **dadurch gekennzeichnet**, es ferner einen Vernetzungsschritt iv der beladenen Polymerzusammensetzung, die zum Vernetzen bestimmt ist, aus Schritt iii umfasst.

## Claims

1. A method for preparing a filled polymeric composition intended to be cross-linked, **characterized in that** it comprises the following steps:
i. preparing a composition comprising an organic polymer, and at least one inorganic filler, this preparation step comprising the two following sub-steps:
i.a mixing the organic polymer and a first portion of the inorganic filler, and
i.b mixing a second portion of the inorganic filler with the mixture obtained in step i.a,
ii. adding to the mixture of the preceding step, a silane compound and a compound generating free radicals under the action of heat, the compound generating free radicals having a decomposition temperature below the decomposition temperature of the inorganic filler, and
iii. grafting the silane compounds to the organic polymer, in order to obtain said filled polymer composition intended to be cross-linked.

2. The method according to claim 1, **characterized in that** the temperature of step i is less than the decomposition temperature of the inorganic filler.

3. The method according to any of the preceding claims, **characterized in that** the temperature of step iii. is sufficient for decomposing the compound generating free radicals, and below the decomposition temperature of the inorganic filler.

4. The method according to any of the preceding claims, **characterized in that** the organic polymer is an olefin polymer, and preferably an ethylene polymer.

5. The method according to any of the preceding claims, **characterized in that** the inorganic filler is a flame-retardant filler.

6. The method according to claim 5, **characterized in that** the flame retardant filler is a metal hydroxide.

7. The method according to claim 5 or 6, **characterized in that** the metal hydroxide is selected from aluminium trihydroxide (ATH), and magnesium dihydroxide (MDH), or one of their mixtures.

8. The method according to any of the preceding claims, **characterized in that** the silane compound is a vinyl alkoxysilane or a carboxysilane.

9. The method according to any of the preceding claims, **characterized in that** the compound generating free radicals is selected from tert-butyl peroxybenzoate, 2,5-dimethyl-2,5-di(tert-butylperoxy)-3-hexyne, 2,5-dimethyl-2,5-di(tert-butylperoxy)-3-hexane, di-tert-butyl peroxide, di(2-tert-butylperoxypropyl-(2))-benzene, OO-tert-butyl O-2-(ethylhexyl) monoperoxycarbonate, dicumyl peroxide, or one of their mixtures.

10. The method according to any of the preceding claims, **characterized in that** the steps i, ii and iii are carried out by using a same mixer (1), said mixer being a longitudinal screw mixer (10) comprising several areas (11, 12, 13) for introducing materials and several heating areas along the mixer (1), as well as an outlet end (14).

11. The method according to claim 10, **characterized in that** the addition of the silane compound and of the compound generating free radicals is achieved at a first introduction area (11) positioned along the mixer (1).

12. The method according to claim 11, **characterized in that** the first introduction area (11) is at a distance of at least twice the diameter of the screw from the outlet end (14) of the mixer.

13. The method according to any of claims 10 to 12, **characterized in that** the introduction of the organic polymer is achieved at a second introduction area (12) positioned along the mixer (1), upstream from the first introduction area (11).

14. The method according to claim 13, **characterized in that** the second introduction area is at a distance of at least 4 times the diameter of the screw from the first introduction area.

15. The method according to claim 13 or 14, **characterized in that** the introduction of the inorganic filler is achieved at the second introduction area (12).

16. The method according to claim 13, **characterized in that** the introduction of the inorganic filler is achieved at the second introduction area (12) and at a third introduction area (13) position along the mixer (1), between the second introduction area (12) and the first introduction area (11).

17. The method according to claim 16, **characterized in that** the third introduction area is at a distance of at least 4 times the diameter of the screw from the first introduction area.

18. The method according to claim 16 or 17, **characterized in that** the third introduction area is at a distance of at least twice the diameter of the screw from the second introduction area.

19. The method according to any of the preceding claims, **characterized in that** step i comprises the degassing of the composition.

20. The method according to any of the preceding claims, **characterized in that** the filled polymeric composition obtained in step iii, does not substantially comprise any cross-linking catalyst.

21. The method according to any of the preceding claims, **characterized in that** the filled polymeric composition obtained in step iii, is shaped as granules.

22. A method for cross-linking a filled polymeric composition obtained by the preparation method as defined in claims 1 to 21, **characterized in that** it further comprises the step iv for cross-linking the filled polymeric composition intended to be cross-linked, obtained in step iii.
